# EUROPEAN PATENT APPLICATION

(11) **EP 4 507 174 A1**
(43) Date of publication of application: **12.02.2025**
(21) Application number: 22936793.3
(22) Date of filing: 12.04.2022
(51) Int. Cl.: H02K 9/19

(54) **SPRAY RING, MOTOR, AND VEHICLE**

(71) Applicant: Contemporary Amperex Intelligence Technology (Shanghai) Limited, Shanghai 200000 (CN)
(72) Inventor: LI, Yang, Shanghai 200120 (CN); HUANG, Xingfu, Shanghai 200120 (CN); TAN, Xiuhua, Shanghai 200120 (CN); ZHAO, Yonggang, Shanghai 200120 (CN); LIU, Yuanlin, Shanghai 200120 (CN); CHAI, Shaobiao, Shanghai 200120 (CN); CHI, Kai, Shanghai 200120 (CN)
(74) Representative: Gong, Jinping
(86) International application number: PCT/CN2022/086267
(87) International publication number: WO 2023/197136

(57) **Abstract**

Provided are a spray ring (100) for alleviating a problem of uneven cooling of an electrical motor (200) of a vehicle (300). The spray ring includes an annular body (10) configured such that a flow passage is formed between the annular body (10) and an external component. The annular body has a first spray hole (15) and a second spray hole (16) that are in communication with the flow passage. The first spray hole has an output direction different from an output direction of the second spray hole. Therefore, a cooling medium can be sprayed on different parts of the winding (40) of the electrical motor through the first spray hole and the second spray hole to cool the different parts of the winding. Therefore, a contact area between the winding and the cooling medium is increased, which can optimize a heat exchange coefficient. **In** addition, the winding can be cooled more evenly, and thus local overheating can be avoided.

## Description

### FIELD

The present disclosure relates to the field of cooling technologies, and more particularly, to a spray ring, an electric motor, and a vehicle.

### BACKGROUND

In the related art, an electric motor includes a housing and a stator provided in the housing, and the stator includes a stator core and a winding provided at an end of the stator core. During an operation of the electric motor, an increased temperature of the winding affects a performance of the electric motor. In some related technologies, the winding has been cooled. However, the winding cannot be cooled evenly.

### SUMMARY

Some embodiments of the present disclosure provide a spray ring, an electric motor, and a vehicle, which can alleviate a problem of uneven cooling.

According to some embodiments of the present disclosure, a spray ring is provided. The spray ring includes an annular body configured such that a flow passage is formed between the annular body and an external component. The annular body has a first spray hole and a second spray hole that are both in communication with the flow passage. The first spray hole has an output direction different from an output direction of the second spray hole.

Since the first spray hole and the second spray hole have different output directions, a cooling medium can be sprayed onto different parts of the winding through the first spray hole and the second spray hole to cool the different parts of the winding. As a result, a contact area between the winding and the cooling medium is increased, which can optimize a heat exchange coefficient. In addition, the winding can be cooled more evenly, and thus local overheating can be avoided.

In some embodiments, the output direction of the first spray hole is parallel to an axial direction of the spray ring, or is angled to the axial direction of the spray ring at an acute angle. The output direction of the second spray hole is parallel to a radial direction of the spray ring, or is angled to the radial direction of the spray ring at an acute angle.

The cooling medium can be axially or substantially axially sprayed through the first spray hole towards an axial end of the winding, and can be radially or substantially radially sprayed through the second spray hole towards a radial periphery of the winding. Therefore, the cooling medium can simultaneously cool the axial end and a radial peripheral surface of the winding. Therefore, the contact area between the winding and the cooling medium can be increased, which can optimize the heat exchange coefficient. In addition, the winding can be cooled more evenly, and thus the local overheating can be avoided.

In some embodiments, the annular body includes a first annular body and a second annular body. The second annular body has a first end connected to the first annular body and a second end located closer to a central axis of the spray ring than the first end of the second annular body. The first spray hole is formed at the second annular body. The second spray hole is formed at the first annular body.

Since the second end of the second annular body is located closer to the central axis of the spray ring than the first end of the second annular body, it is beneficial to form the first spray hole that has a central axis axially extending at the second annular body. The axial end of the winding is cooled by spraying the cooling medium towards the axial end of the winding through the first spray hole.

In some embodiments, the second end of the second annular body is axially located further away from the first annular body than the first end of the second annular body.

Since the second annular body and the first annular body are sequentially arranged in the axial direction of the spray ring, it is beneficial to arrange the second annular body at the axial end of the winding. The cooling medium is sprayed towards the axial end of the winding through the first spray hole on the second annular body to cool the axial end of the winding.

In some embodiments, the annular body further includes a third annular body. The third annular body has an inner ring connected to the second end of the second annular body. An outer diameter of the third annular body is greater than an outer diameter of the first annular body.

Since the outer diameter of the third annular body is greater than the outer diameter of the first annular body, it is beneficial for a connection to the housing by the third annular body.

In some embodiments, the annular body further includes a fourth annular body. The fourth annular body has a first end connected to the second end of the second annular body and a second end connected to the inner ring of the third annular body. The second end of the fourth annular body is axially located further away from the second annular body than the first end of the fourth annular body.

To transitionally connect the second annular body and the third annular body, the fourth annular body is arranged between the second annular body and the third annular body. The inner ring of the third annular body is connected to the second annular body by the fourth annular body.

According to some embodiments of the present disclosure, an electric motor is provided. The electric motor includes a housing, a stator core provided in the housing, a winding provided at an end of the stator core, and the spray ring according to any one of the above embodiments. The spray ring is provided at a position where the winding is located and configured to spray a cooling medium towards the winding.

The spray ring has a first spray hole and a second spray hole. The first spray hole can spray the cooling medium axially to an axial end of the winding. The second spray hole can spray the cooling medium radially to a radial periphery of the winding. Therefore, the cooling medium can simultaneously cool the axial end and the radial peripheral surface of the winding. As a result, a contact area between the winding and the cooling medium is increased, which can optimize a heat exchange coefficient. In addition, the winding can be cooled more evenly, and thus the local overheating can be avoided.

In some embodiments, a cavity is formed between the spray ring and the housing. The cavity is constructed as the flow passage. The first spray hole and the second spray hole are configured to spray the cooling medium in the cavity towards the winding.

Since the cavity formed between the spray ring and the housing can contain the cooling medium, the spray ring has sufficient cooling medium to be sprayed to the winding.

In some embodiments, the spray ring includes a first annular body arranged around the winding and a second annular body disposed at an end of the winding away from the stator core. The first spray hole is formed at the second annular body. The second spray hole is formed at the first annular body.

The second annular body is disposed at the end of the winding away from the stator core. The first spray hole can spray the cooling medium towards the axial end of the winding. The first annular body is disposed at the radial periphery of the winding. The second spray hole can spray the cooling medium towards the radial periphery of the winding. Therefore, the winding can be cooled more evenly, and thus the local overheating can be avoided.

In some embodiments, the second annular body has a first end connected to the first annular body, and a second end axially located further away from the winding than the first end of the second annular body and radially located close to a central axis of the housing.

Since the first spray hole that has the central axis axially extending is formed at the second annular body, the cooling medium can be sprayed towards the axial end of the winding through the first spray hole to cool the axial end of the winding.

In some embodiments, the spray ring further includes a third annular body. The third annular body has an inner ring connected to the second end of the second annular body. An outer diameter of the third annular body is greater than an outer diameter of the first annular body. The third annular body is connected to the housing.

The outer diameter of the third annular body is greater than the outer diameter of the first annular body. The third annular body is configured to be connected to the housing.

In some embodiments, the stator core has a first channel. The housing has a first hole and a second hole. The first hole is configured to introduce a cooling medium into the first channel. The second hole is configured to introduce the cooling medium to a position between the spray ring and the housing.

By introducing the cooling medium into the first channel through the first hole, and introducing the cooling medium to a position between the spray ring and the housing through the second hole, a temperature of the cooling medium can be better controlled, which allows a temperature of the cooling medium for cooling the stator core to tend to be consistent with a temperature of the cooling medium for cooling the winding. In addition, the temperature of the cooling medium can be relatively controlled to be lower, which is more conducive to cooling the winding.

In some embodiments, the electric motor further includes a second channel. The second channel has a channel wall connected to an outer wall surface of the housing. The second channel is in communication with the first hole and the second hole, respectively.

The cooling medium is diverted by the second channel into cavities near the windings at two ends of the electric motor and into the first channel at an outer circumference of the stator core of the electric motor. After reasonable diversion, a part of the cooling medium directly enters the spray ring after being cooled by an oil cooler. As a result, the temperature of the cooling medium can be relatively controlled to be lower, which is more conducive to the cooling of the winding.

In some embodiments, the first hole has a greater hole diameter than the second hole.

Most of the cooling medium in the second channel enters the first channel through the first hole, while the rest of the cooling medium is diverted into the cavity near the winding by the second hole. After cooling the stator core through the first channel, the cooling medium converges to the cavity near the winding and is sprayed to the winding through the spray ring.

In some embodiments, a plurality of first channels is provided, and the plurality of first channels is arranged in a circumferential direction of the stator core. Each of the plurality of first channels extends in an axial direction of the stator core and has a notch in communication with an adjacent first channel. The first hole is in communication with a notch on one of the plurality of first channels.

The cooling medium in the second channel enters one of the plurality of first channels through the first hole and the notch on the one of the plurality of first channels. A notch in communication with an adjacent first channel is formed at the one of the plurality of first channels. Therefore, the cooling medium in the one of the plurality of first channels can enter the adjacent first channel, and so on. As a result, the cooling medium flows into the plurality of first channels arranged in the circumferential direction of the stator core to cool the stator core.

According to some embodiments of the present disclosure, an electric motor is provided. The electric motor includes a housing having a first hole and a second hole, a stator core provided in the housing and having a first channel, a winding provided at an end of the stator core; and a second channel having a channel wall connected to an outer wall surface of the housing. The second channel is in communication with the first hole and the second hole, respectively. The first hole is in communication with the first channel, and the second hole is in communication with a region where the winding is located.

The cooling medium is diverted by the second channel, and thus a part of the cooling medium enters the first channel to cool the stator core, and the other part of the cooling medium enters the region where the winding is located to cool the winding. After reasonable diversion, the cooling medium can directly enter the region where the winding is located after being being cooled by an oil cooler. Therefore, a temperature of the cooling medium can be relatively controlled to be lower, which is more conducive to the cooling of the winding.

In some embodiments, the first hole has a greater hole diameter than the second hole.

Most of the cooling medium in the second channel enters the first channel through the first hole, while the rest of the cooling medium is diverted into a region where the two windings are located by the second hole. After cooling the stator core through the first channel, the cooling medium converges to the region where the windings are located to cool the windings.

In some embodiments, a plurality of first channels is provided, and the plurality of first channels is arranged in a circumferential direction of the stator core. Each of the plurality of first channels extends in an axial direction of the stator core and has a notch in communication with an adjacent first channel. The first hole is in communication with a notch on one of the plurality of first channels.

The cooling medium in the second channel enters one of the plurality of first channels through the first hole and the notch on one of the plurality of first channels. A notch in communication with the adjacent first channel is formed at the one of the plurality of first channels. Therefore, the cooling medium in the one of the plurality of first channels can enter the adjacent first channel, and so on. As a result, the cooling medium flows into the plurality of first channels arranged in the circumferential direction of the stator core to cool the stator core.

In some embodiments, the electric motor further includes a spray ring. The spray ring is disposed in the housing and located at a position where the winding is located. The spray ring has a third hole configured to spray the cooling medium introduced through the second hole towards the winding.

The cooling medium is diverted by the second channel. A part of the cooling medium enters the first channel to cool the stator core, and the other part of the cooling medium enters the region where the winding is located. The cooling medium is sprayed to the winding through the third hole formed at the spray ring to cool the winding. Therefore, the embodiments according to the present disclosure have the effect of simultaneously cooling the stator core of and the winding of the electric motor.

In some embodiments, the third hole includes a first spray hole and a second spray hole. The first spray hole is configured to spray a cooling medium towards the winding in an axial direction of the stator core, and a second spray hole is configured to spray a cooling medium towards the winding in a radial direction of the stator core.

The cooling medium can be sprayed to the axial end of the winding through the first spray hole, and can be sprayed to a radial peripheral surface of the winding through the second spray hole. As a result, a cooling region range of the winding can be increased, and thus the winding can be cooled more evenly. In addition, the heat exchange coefficient of the winding can be further improved, and thus a local high temperature can be avoided.

In some embodiments, the spray ring includes a first annular body arranged around the winding, and a second annular body disposed at an end of the winding away from the stator core. Each of the first annular body and the second annular body has the third hole.

The first annular body is arranged radially around the winding, and the cooling medium can be sprayed to the radial peripheral surface of the winding through the third hole formed at the first annular body. The second annular body is disposed at the end of the winding away from the stator core, and the cooling medium can be sprayed to an axial end surface of the winding through the third hole formed at the second annular body. Therefore, a radial outer circumference surface and the axial end surface of the winding can be cooled simultaneously, and thus the cooling region range of the winding is increased, which allows the winding to be cooled more evenly.

In some embodiments, the third hole includes a second spray hole formed at the first annular body and a first spray hole formed at the second annular body. The second spray hole has a central axis extending in a radial direction of the stator core. The first spray hole has a central axis extending in an axial direction of the stator core.

Since the central axis of the first spray hole extends in the axial direction of the stator core, the cooling medium can be axially sprayed to the axial end of the winding. In addition, since the central axis of the second spray hole extends in the radial direction of the stator core, the cooling medium can be radially sprayed to the radial periphery of the winding. As a result, the radial outer circumferential surface and the axial end surface of the winding can be simultaneously cooled. Therefore, the winding can be cooled more evenly, and a local high temperature can be avoided.

In some embodiments, the second annular body has a first end connected to the first annular body, and a second end axially located further away from the winding than the first end of the second annular body and radially located close to a central axis of the housing.

Since the second end of the second annular body is axially located further away from the winding than the first end of the second annular body and radially located close to a central axis of the housing, the first spray hole that has the central axis axially extending can be easily formed at the second annular body. As a result, the cooling medium can be sprayed to the axial end of the winding through the first spray hole to cool the axial end of the winding.

In some embodiments, the spray ring further includes a third annular body. The third annular body has an inner ring connected to the second end of the second annular body. An outer diameter of the third annular body is greater than an outer diameter of the first annular body. The third annular body is connected to the housing.

The outer diameter of the third annular body is greater than the outer diameter of the first annular body, and the third annular body is configured to be connected to the housing.

According to some embodiments of the present disclosure, a vehicle is provided. The vehicle includes the electric motor according to any one of the above embodiments.

The vehicle includes the electric motor according to the embodiments of the present disclosure and accordingly has the beneficial effect of the electric motor.

Based on the above embodiments, the present disclosure has at least the following beneficial effects.

In some embodiments, since the first spray hole and the second spray hole have different output directions, the cooling medium can be sprayed onto different parts of the winding through the first spray hole and the second spray hole to cool the different parts of the winding. As a result, the contact area between the winding and the cooling medium is increased, which can optimize the heat exchange coefficient. In addition, the winding can be cooled more evenly, and thus local overheating can be avoided.

### BRIEF DESCRIPTION OF THE DRAWINGS

In order to clearly illustrate technical solutions of embodiments of the present disclosure, a brief description of drawings used in embodiments is given below. Obviously, the drawings in the following descriptions are only part embodiments of the present disclosure, and for those skilled in the art, other drawings can be obtained according to these drawings without creative effort.
FIG. 1 is a schematic structural view showing a vehicle according to some embodiments of the present disclosure.
FIG. 2 is a schematic sectional view of an electric motor according to some embodiments of the present disclosure.
FIG. 3 is a schematic view of a spray ring from a first viewing angle according to some embodiments of the present disclosure.
FIG. 4 is a schematic view of a spray ring from a second viewing angle according to some embodiments of the present disclosure.
FIG. 5 is a schematic top view of a spray ring according to some embodiments of the present disclosure.
FIG. 6 is a schematic sectional view taken along line A-A of FIG. 5.

In the accompanying drawings, the drawings are not drawn to actual scale.

Reference numerals of the accompanying drawings: 10, annular body; 11, first annular body; 12, second annular body; 13, third annular body; 14, fourth annular body; 15, first spray hole; 16, second spray hole; 17, third hole; 20, housing; 21, first hole; 22, second hole; 30, stator core; 31, first channel; 32, notch; 40, winding; 50, cavity; 60, second channel; 61, oil inlet; 62, plug; 70, rotor shaft; 80, end cover; 100, spray ring; 200, electric motor; 300, vehicle; 301, axle; 302, wheel; 303, controller; 304, battery.

### DETAILED DESCRIPTION

Embodiments of the present disclosure are described in further detail below in connection with accompanying drawings and embodiments. Detailed descriptions of the following embodiments and the accompanying drawings are used to exemplarily explain principles of the present disclosure, but cannot be used to limit a scope of the present disclosure, i.e., the present disclosure is not limited to the depicted embodiments.

In the description of the present disclosure, it should be noted that "plurality" means at least two, unless otherwise specifically defined. The orientation or position relationship indicated by the terms "upper", "lower", "left", "right", "inner", "outer", etc., is only for the convenience of describing the present disclosure and simplifying the description, rather than indicating or implying that the pointed apparatus or element must have a specific orientation, or be constructed and operated in a specific orientation, and therefore cannot be understood as a limitation to the present disclosure. In addition, terms such as "first", "second", and "third" are used herein for purposes of description and are not intended to indicate or imply relative importance.

"Perpendicular" is not perpendicular in the strict sense, but within the tolerance. "Parallel" is not parallel in the strict sense, but within the tolerance.

The orientation words appearing in the following description are all directions shown in the figures and do not limit the specific structure of the present disclosure. In the description of the embodiments of the present disclosure, unless otherwise clearly specified and limited, it should further be noted that technical terms such as "install", "connect", "connect to" and the like should be understood in a broad sense. For example, it may be a fixed connection or a detachable connection or connection as one piece; direct connection or indirect connection through an intermediate. For those skilled in the art, the specific meaning of the above-mentioned terms in the embodiments of the present disclosure can be understood according to specific circumstances.

With the continuous attention paid to environmental protection in recent years, a new energy vehicle occupies an increasingly important position. Electric drive power is a power source of the new energy vehicle, and an electric motor is a key component for converting electrical energy into mechanical energy. The electric motor generally includes a stator and a rotor. The stator is a stationary component of the electric motor, and the rotor is a rotatable component. The stator mainly functions to generate a rotation magnetic field, and the rotor mainly functions to interact with the magnetic field generated by the stator and output a moment.

With the continuous development of electric drive technology for the new energy vehicle, the drive electric motor is developing more and more towards high torque density and high power density. High heat generated by the electric motor during its operation due to a magnetic field force directly affects the service life and reliability of the electric motor, in particular for a permanent magnet electric motor. The high temperature will increase the risk of demagnetization of the permanent magnet steel and will reduce the performance of the permanent magnet steel. Therefore, an effective cooling on the electric motor can contribute to improving the sustained power density of the electric motor and prolonging the peak power duration, which in turn improves a power performance of the vehicle or lowers cost of the electric motor when the power performance demand of the vehicle remains unchanged.

In some embodiments, the electric motor includes a housing and a stator provided in the housing. The stator includes a stator core and a winding provided at an end of the stator core. In the related art, oil is sprayed to the winding by a spray ring to cool the winding, reducing high heat generated by the electric motor during its operation. However, although the temperature of the winding can be reduced through spraying the oil to the winding by the spray ring, there are problems such as concentrated cooling regions, uneven cooling, easy generation of local overheating and local high temperature, and influence on a heat transfer coefficient.

To this end, some embodiments of the present disclosure provide a spray ring, an electric motor, and a vehicle. A cooling medium is sprayed axially and radially to the winding, which can improve uniformity of cooling of the winding and alleviate the problem of the local high temperature of the winding.

A vehicle 300 according to some embodiments of the present disclosure includes a new energy vehicle, and the new energy vehicle may be a pure electric vehicle, a hybrid vehicle, or an extended range vehicle.

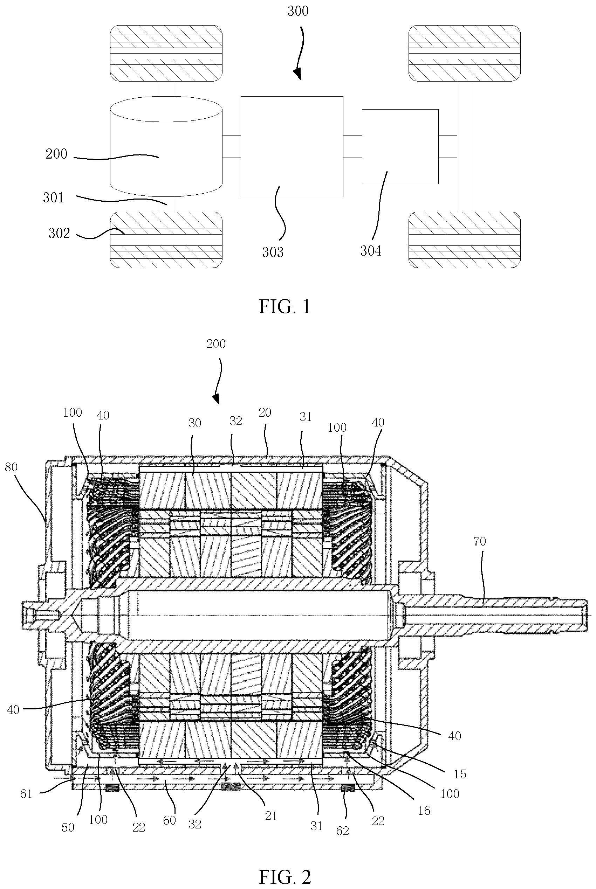

Referring to FIG. 1, in some embodiments, the vehicle 300 includes an axle 301, a wheel 302 connected to the axle 301, an electric motor 200, a controller 303, and a battery 304. The electric motor 200 is configured to drive the axle 301 to drive the wheel 302 to rotate. The controller 303 is configured to control the electric motor 200 to operate. The battery 304 may be disposed at a bottom, a head, or a tail of the vehicle 300, to supply electric energy to the electric motor 200 and other components of the vehicle for their operations.

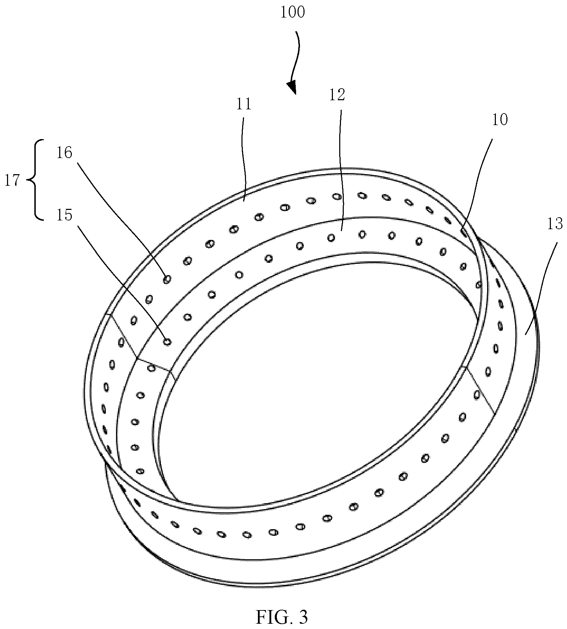

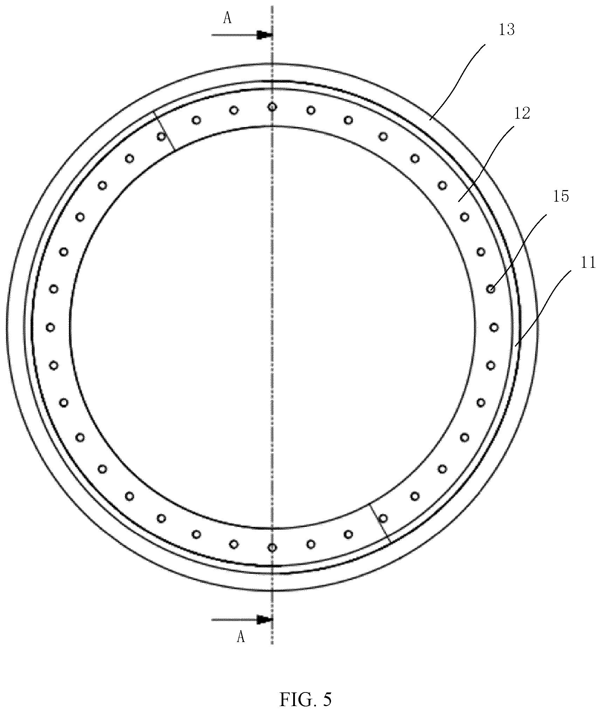

Referring to FIG. 2, in some embodiments, the electric motor 200 includes a housing 20 and a stator provided in the housing 20. The stator includes a stator core 30 and a winding 40 provided at an end of the stator core 30. The electric motor 200 further includes a spray ring 100 provided in the housing 20, and the spray ring 100 is located at a position where the winding 40 is located. Referring to FIG. 3 to FIG. 6, in some embodiments, the spray ring 100 includes an annular body 10 configured such that a flow passage is formed between the annular body 10 and an external component. The annular body 10 has a first spray hole 15 and a second spray hole 16 that are both in communication with the flow passage. The first spray hole 15 has an output direction different from an output direction of the second spray hole 16. In another exemplary embodiment of the present disclosure, the external component includes the housing 20.

Since the first spray hole and the second spray hole have different output directions, a cooling medium can be sprayed on different parts of the winding through the first spray hole and the second spray hole to cool the different parts of the winding. As a result, a contact area between the winding and the cooling medium is increased, which can optimize a heat exchange coefficient. In addition, the winding can be cooled more evenly, and thus the local overheating can be avoided.

In some embodiments, the output direction of the first spray hole 15 is parallel to an axial direction of the spray ring, or is angled to the axial direction of the spray ring at an acute angle. The output direction of the second spray hole 16 is parallel to a radial direction of the spray ring, or is angled to the radial direction of the spray ring at an acute angle.

The cooling medium can be axially or substantially axially sprayed through the first spray hole towards an axial end of the winding, and can be radially or substantially radially sprayed through the second spray hole towards a radial periphery of the winding. Therefore, the cooling medium can simultaneously cool the axial end and a radial peripheral surface of the winding. Therefore, the contact area between the winding and the cooling medium can be increased, which can optimize the heat exchange coefficient. In addition, the winding can be cooled more evenly, and thus the local overheating can be avoided.

In some embodiments, a central axis of the first spray hole 15 extends in an axial direction of the spray ring 100, and a central axis of the second spray hole 16 extends in a radial direction of the spray ring 100.

The annular body 10 has the first spray hole 15 and the second spray hole 16. The central axis of the first spray hole 15 extends in the axial direction of the spray ring 100, and thus can spray the cooling medium axially towards the axial end of the winding 40. The central axis of the second spray hole 16 extends in the radial direction of the spray ring 100, and thus can spray the cooling medium radially towards the radial periphery of the winding 40. Therefore, the cooling medium can simultaneously cool the axial end and the radial outer surface of the winding 40. Therefore, the contact area between the winding 40 and the cooling medium can be increased, which can optimize the heat exchange coefficient. In addition, the winding 40 can be cooled more evenly, and the local overheating can be avoided.

In some embodiments, the annular body 10 includes a first annular body 11 and a second annular body 12. The second annular body 12 has a first end connected to the first annular body 11 and a second end located closer to a central axis of the spray ring 100 than the first end of the second annular body 12. The first spray hole 15 is formed at the second annular body 12. The second spray hole 16 is formed at the first annular body 11.

A radial dimension of the first annular body 11 from the first end to the second end thereof is constant, which is beneficial to surround the radial periphery of the winding 40. The second spray hole 16 is formed at the first annular body 11, and thus can spray the cooling medium to the radial circumference of the winding 40 to cool the radial periphery of the winding 40.

The first end of the second annular body 12 is connected to the first annular body 11. A radial dimension of the first end of the second annular body 12 is equal to the radial dimension of the first annular body 11. The second end of the second annular body 12 is located closer to the central axis of the spray ring 100 than the first end of the second annular body 12. A radial dimension of the second end of the second annular body 12 is smaller than the radial dimension of the first end of the second annular body 12.

The second end of the second annular body 12 is obliquely arranged, or the second end of the second annular body 12 is formed as an inner ring of the second annular body 12, which is beneficial to form the first spray hole 15 that has the central axis axially extending at the second annular body 12. As a result, the cooling medium can be sprayed to the axial end of the winding 40 through the first spray hole 15 to cool the axial end of the winding 40.

In some embodiments, the second end of the second annular body 12 is axially located further away from the first annular body 11 than the first end of the second annular body 12.

The second annular body 12 and the first annular body 11 are sequentially arranged in the axial direction of the spray ring 100, which is beneficial to arrange the second annular body 12 at the axial end of the winding 40. As a result, the cooling medium can be sprayed to the axial end of the winding 40 through the first spray hole 15 on the second annular body 12 to cool the axial end of the winding 40.

In some embodiments, the annular body 10 further includes a third annular body 13. The third annular body 13 has an inner ring connected to the second end of the second annular body 12. An outer diameter of the third annular body 13 is greater than an outer diameter of the first annular body 11.

The outer diameter of the third annular body 13 is greater than the outer diameter of the first annular body 11, which facilitates a connection with the housing 20 by the third annular body 13. The connection herein includes a connection by means of a connector, a snap connection or an abutment by means of a slot limit, or an interference fit to fix the spray ring 100.

In some embodiments, the annular body 10 further includes a fourth annular body 14. The fourth annular body 14 has a first end connected to the second end of the second annular body 12 and a second end axially connected to the inner ring of the third annular body 13. The second end of the fourth annular body 14 is axially located further away from the second annular body 12 than the first end of the fourth annular body 14.

That is, the inner ring of the third annular body 13 is connected to the second end of the second annular body 12 by the fourth annular body 14. Since the first end of the second annular body 12 is connected to the first annular body 11, the radial dimension of the first end of the second annular body 12 is equal to the radial dimension of the first annular body 11, the second end of the second annular body 12 is located closer to the central axis of the spray ring 100 than the first end of the second annular body 12, the radial dimension of the second end of the second annular body 12 is smaller than the radial dimension of the first end of the second annular body 12, and the outer diameter of the third annular body 13 is greater than the outer diameter of the first annular body 11, the fourth annular body 14 is arranged between the second annular body 12 and the third annular body 13 to transitionally connect the second annular body 12 and the third annular body 13.

Referring to FIG. 2, an electric motor according to some embodiments is provided. The electric motor includes a housing 20, a stator core 30, a winding 40, and the spray ring 100 according to any one of the above embodiments. The stator core 30 is provided in the housing 20. The winding 40 is provided at an end of the stator core 30. The spray ring 100 is provided at a position where the winding 40 is located and configured to spray a cooling medium towards the winding 40.

The spray ring 100 has a first spray hole 15 and a second spray hole 16. A central axis of the first spray hole 15 extends in the axial direction of the spray ring 100, and thus the cooling medium can be axially sprayed through the first spray hole 15 towards the axial end of the winding 40. A central axis of the second spray hole 16 extends in the radial direction of the spray ring 100, and thus the cooling medium can be radially sprayed through the second spray hole 16 towards the radial periphery of the winding 40. Therefore, the cooling medium can simultaneously cool the axial end and the radial peripheral surface of the winding 40. As a result, the contact area between the winding 40 and the cooling medium is increased, which can optimize the heat exchange coefficient. In addition, the winding 40 can be cooled more evenly, and thus the local overheating can be avoided.

In another exemplary embodiment of the present disclosure, the spray ring 100 may be designed into a complete ring structure or a segmented structure based on actual structural characteristics and cooling requirements.

In some embodiments, a cavity 50 is formed between the spray ring 100 and the housing 20. The first spray hole 15 and the second spray hole 16 are configured to direct the cooling medium in the cavity 50 towards the winding 40.

The cavity 50 formed between the spray ring 100 and the housing 20 can be used to accommodate the cooling medium. In this way, the spray ring 100 has sufficient cooling medium to be sprayed towards the winding 40.

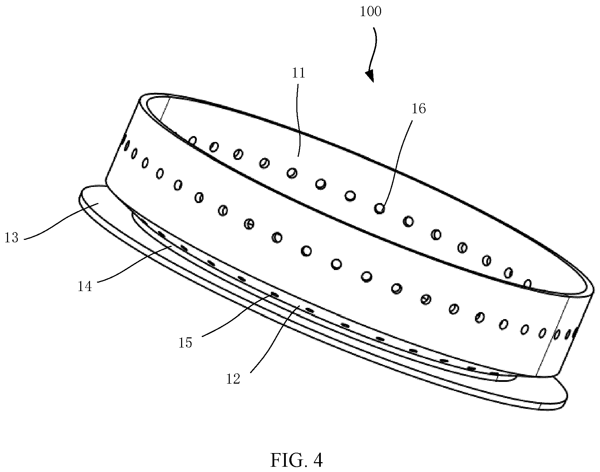

Referring to FIG. 2 and FIG. 4, in some embodiments, the spray ring 100 includes a first annular body 11 and a second annular body 12. The first annular body 11 is disposed at a radial periphery of the winding 40, and the second annular body 12 is disposed at an end of the winding 40 away from the stator core 30. The first spray hole 15 is formed at the second annular body 12, and a second spray hole 16 is formed at the first annular body 11.

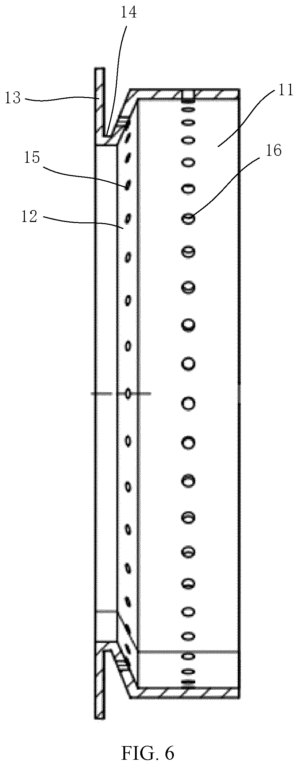

Referring to FIG. 6, the second annular body 12 is disposed at the end of the winding 40 away from the stator core 30. The central axis of the first spray hole 15 extends in the axial direction of the spray ring 100, and the cooling medium can be sprayed axially towards the axial end of the winding 40. The first annular body 11 is disposed at the radial periphery of the winding 40. The central axis of the second spray hole 16 extends in the radial direction of the spray ring 100, and the cooling medium can be sprayed radially towards the radial periphery of the winding 40. By forming second spray holes 16 and first spray holes 15 of a reasonable number and hole diameters on the outer circumferential surface and the axial end surface of the winding 40, the cooling medium sprayed through the second spray hole 16 and the first spray hole 15 can cool the radial outer circumferential surface and the axial end surface of the winding 40 simultaneously. Therefore, the winding 40 can be cooled more evenly, and thus the local overheating can be avoided.

In some embodiments, the second annular body 12 has a first end connected to the first annular body 11, and a second end axially located further away from the winding 40 than the first end of the second annular body 12 and radially located close to a central axis of the housing 20.

The second end of the second annular body 12 is axially located further away from the winding 40 than the first end of the second annular body 12 and is located radially close to the central axis of the housing 20.Accordingly, the second end of the second annular body 12 is arranged obliquely, or the second end of the second annular body 12 is formed as the inner ring of the second annular body 12, which is beneficial to form the first spray hole 15 that has the central axis axially extending on the second annular body 12. Therefore, the cooling medium can be sprayed through the first spray hole 15 to the axial end of the winding 40 to cool the axial end of the winding 40. In some embodiments, the spray ring 100 further includes the third annular body 13. The third annular body 13 has the inner ring connected to the second end of the second annular body 12. The outer diameter of the third annular body 13 is greater than the outer diameter of the first annular body 11. The third annular body 13 is connected to the housing 20.

The outer diameter of the third annular body 13 is greater than the outer diameter of the first annular body 11, and thus the third annular body 13 is used to be connected to the housing 20. For example, the third annular body 13 is connected to the housing 20 by a connector, or the third annular body 13 is snapped or abutted with a slot on the housing 20. In some other embodiments, the third annular body 13 is connected to the housing 20 by means of the interference fit.

Referring to FIG. 2, in some embodiments, the stator core 30 has a first channel 31. The housing 20 has a first hole 21 and a second hole 22. The first hole 21 is configured to introduce the cooling medium into the first channel 31, and the second hole 22 is configured to introduce the cooling medium to a position between the spray ring 100 and the housing 20.

The cooling medium is introduced into the first channel 31 through the first hole 21, and is introduced to the position between the spray ring 100 and the housing 20 through the second hole 22. Therefore, the temperature of the cooling medium can be better controlled, which allows the temperature of the cooling medium for cooling the stator core 30 to tend to be consistent with the temperature of the cooling medium for cooling the winding 40. Therefore, the temperature of the cooling medium can be relatively controlled to be lower, which is more conducive to cooling the winding 40. In combination with the first spray hole 15 and the second spray hole 16 formed at the spray ring 100, the embodiments of the present disclosure have a function of cooling the stator core 30 and the winding 40 of the electric motor simultaneously, and the cooling is uniform. In this way, the local high temperature can be avoided.

In some embodiments, the electric motor further includes a second channel 60. The second channel 60 has a channel wall connected to an outer wall surface of the housing 20. The second channel 60 is in communication with the first hole 21 and the second hole 22, respectively.

The cooling medium cooled by an oil cooler is diverted by the second channel 60 into the cavities 50 near the windings 40 at two ends of the electric motor and into the first channel 31 at the outer circumference of the stator core 30 of the electric motor. After reasonable diversion, a part of the cooling medium directly enters the spray ring 100 after being cooled by the oil cooler. Therefore, the temperature of the cooling medium can be relatively controlled to be lower, which is more conducive to the cooling of the winding 40.

In some embodiments, the second channel 60 has an oil inlet 61. The oil inlet 61 may be formed at a side of the electric motor, or may be formed at a side of a reducer or an appropriate region of an axial section of an oil channel based on the convenience of the structure. That is, the oil inlet 61 on the second channel 60 may be formed at the axial end of the second channel 60, or formed at an axial middle part of the second channel 60.

In some embodiments, the first hole 21 has a greater hole diameter than the second hole 22.

Most of the cooling medium in the second channel 60 enters the first channel 31 through the first hole 21, while the rest of the cooling medium is diverted into the cavity 50 near the winding 40 by the second hole 22. After cooling the stator core 30 through the first channel 31, the cooling medium converges to the cavities 50 near the windings 40 at two ends and is sprayed to the winding 40 through the spray ring 100. Then, the cooling medium is discharged through an outlet formed on a bottom of the housing 20. The outlet formed at the bottom of the housing 20 is not shown.

The hole diameter of the first hole 21 is greater than the hole diameter of the second hole 22. Therefore, more than 50% of the cooling medium in the second channel 60 may enter the first channel 31, and less than 50% of the rest cooling medium may enter the cavities 50 corresponding to the windings 40 at the two ends of the stator core 30.

In some embodiments, a plurality of first channels 31 is provided, and the plurality of first channels 31 is arranged in a circumferential direction of the stator core 30. Each first channel 31 extends in an axial direction of the stator core 30 and has a notch 32 in communication with an adjacent first channel 31. The first hole 21 is in communication with a notch 32 on one of the plurality of first channels 31.

The cooling medium in the second channel 60 enters one of the plurality of first channels 31 through the first hole 21 and the notch 32 on the one of the plurality of first channels 31. A notch 32 in communication with the adjacent first channel 31 is formed at the one of the plurality of first channels 31. Therefore, the cooling medium in the one of the plurality of first channels 31 can enter the adjacent first channel 31, and so on. As a result, the cooling medium flows into the plurality of first channels 31 arranged in the circumferential direction of the stator core 30 to cool the stator core. 30

In some embodiments, notches 32 formed at the plurality of first channels 31 are located on one circular ring. That is, the notches 32 formed at the plurality of first channels 31 are connected to each other to form an annular flow passage, facilitating the flow of the cooling medium between the plurality of first channels 31.

In another exemplary embodiment of the present disclosure, the annular flow passage formed by connecting the notches 32 formed at the plurality of first channels 31 is located at an axial middle part of the stator core 30.

In some embodiments, the stator core 30 is provided with windings 40 at two axial ends of the stator core 30, respectively. The housing 20 has a first hole 21 at an axial middle part of the housing 20, and one second hole 22 is formed at each of two sides of the first hole 21, respectively. The first hole 21 is configured to introduce the cooling medium to the first channel 31. Two second holes 22 are configured to introduce the cooling medium to the respective windings 40, respectively.

Referring to FIG. 2, an electric motor according to some embodiments of the present disclosure is provided. The electric motor includes a housing 20, a stator core 30, a winding 40, and a second channel 60.

The housing 20 has a first hole 21 and a second hole 22. The stator core 30 is provided in the housing 20 and has a first channel 31. The winding 40 is provided at an end of the stator core 30. The second channel 60 has a channel wall connected to an outer wall surface of the housing 20. The second channel 60 is in communication with the first hole 21 and the second hole 22, respectively. The first hole 21 is in communication with the first channel 31, and the second hole 22 is in communication with a region where the winding 40 is located.

A cooling medium cooled by the oil cooler is diverted by the second channel 60. A part of the cooling medium enters the first channel 31 to cool the stator core 30, and the other part of the cooling medium enters the region where the winding is located to cool the winding 40. After reasonable diversion, the cooling medium can directly enter the region where the winding 40 is located after being cooled by the oil cooler. Therefore, the temperature of the cooling medium can be relatively controlled to be lower, which is more conducive to the cooling of the winding 40.

In some embodiments, the second channel 60 extends in the axial direction of the stator core 30.

In some embodiments, the first hole 21 is located at an axial middle of the second channel 60 and an axial middle of the first channel 31. The second hole 22 is located at the axial end of the second channel 60, corresponding to the position of the winding 40. Therefore, the flow passage can be minimized and the loss along the passage can be reduced.

In some embodiments, the first hole 21 has a greater hole diameter than the second hole 22.

Since the hole diameter of the first hole 21 is greater than the hole diameter of the second hole 22, most of the cooling medium in the second channel 60 enters the first channel 31 through the first hole 21, while the rest of the cooling medium is diverted into a region where the two windings 40 are located by the second hole 22. After cooling the stator core 30 through the first channel 31, the cooling medium converges to the region where the windings 40 are located to cool the windings 40.

In some embodiments, since the hole diameter of the first hole 21 is greater than the hole diameter of the second hole 22, more than 50% of the cooling medium in the second channel 60 may enter the first channel 31, and the remaining less than 50% of the cooling medium may enter the region where the windings 40 at the ends of the stator core 30 are located.

In some embodiments, a plurality of first channels 31 is provided, and the plurality of first channels 31 is arranged in a circumferential direction of the stator core 30. Each first channel 31 extends in an axial direction of the stator core 30 and has a notch 32 in communication with an adjacent first channel 31. The first hole 21 is in communication with a notch 32 on one of the plurality of first channels 31.

The cooling medium in the second channel 60 enters one of the plurality of first channels 31 through the first hole 21 and the notch 32 on the one of the plurality of first channels 31. A notch 32 in communication with the adjacent first channel 31 is formed at the one of the plurality of first channels 31. Therefore, the cooling medium in the one of the plurality of first channels 31 can enter the adjacent first channel 31, and so on. As a result, the cooling medium flows into the plurality of first channels 31 arranged in the circumferential direction of the stator core 30 to cool the stator core 30.

In another exemplary embodiment of the present disclosure, notches 32 formed at the plurality of first channels 31 are located on one circular ring. That is, the notches 32 formed at the plurality of first channels 31 are connected to each other to form an annular flow passage, facilitating the flow of the cooling medium between the plurality of first channels 31.

In another exemplary embodiment of the present disclosure, the annular flow passage is located at the axial middle part of the first channel 31. The first hole 21 on the housing 20 is located at the axial middle part of the first channel 31. The oil inlet 61 on the second channel 60 may also be formed at the axial middle part of the second channel 60. As a result, the oil inlet 61, the first hole 21, and the annular flow passage are in communication with each other in a shortest path, thereby reducing the loss along the passage.

In some embodiments, the second channel 60 has machining holes at positions corresponding to the first hole 21 and the second hole 22, respectively. The first hole 21 and the second hole 22 are machined by the machining holes. After the machining of the first hole 21 and the second hole 22 is completed, plugs 62 are disposed at the machining holes to ensure a sealing performance of the second channel 60.

In some embodiments, the electric motor 200 further includes a spray ring 100. The spray ring 100 is disposed in the housing 20 and located at a position where the winding 40 is located. The spray ring 100 has a third hole 17 configured to spray a cooling medium introduced through the second hole 22 towards the winding 40.

The cooling medium cooled by the oil cooler is diverted by the second channel 60. A part of the cooling medium enters the first channel 31 to cool the stator core 30, and the other part of the cooling medium enters the region where the winding 40 is located. The cooling medium can be sprayed to the winding 40 through the third hole 17 formed at the spray ring 100 to cool the winding 40. Therefore, the embodiments according to the present disclosure have the effect of cooling the stator core 30 and the winding 40 of the electric motor simultaneously.

In some embodiments, the third hole 17 includes a first spray hole 15 and a second spray hole 16. The first spray hole 15 is configured to spray a cooling medium towards the winding 40 in an axial direction of the stator core 30, and the second spray hole 16 is configured to spray a cooling medium towards the winding 40 in a radial direction of the stator core 30.

The cooling medium can be sprayed towards the winding 40 through the first spray hole 15 in the axial direction of the stator core 30, and can be sprayed to the axial end of the winding 40. The cooling medium can be sprayed towards the winding 40 through the second spray hole 16 in the radial direction of the stator core 30, and can be sprayed to the radial peripheral surface of the winding 40. By forming second spray holes 16 and first spray holes 15 of a reasonable number and hole diameters on the outer circumferential surface and the axial end surface of the winding 40, the cooling medium sprayed through the second spray hole 16 and the first spray hole 15 can cool the radial outer circumferential surface and the axial end surface of the winding 40 simultaneously. Therefore, the cooling region range of the winding 40 is increased, which allows the winding 40 to be cooled more evenly. In addition, the heat exchange coefficient of the winding is further improved, and thus the local high temperature can be avoided.

Referring to FIG. 2 to FIG. 4, in some embodiments, the spray ring 100 includes a first annular body 11 and a second annular body 12. The first annular body 11 is arranged radially around the winding 40. The second annular body 12 is disposed at an end of the winding 40 away from the stator core 30. Each of the first annular body 11 and the second annular body 12 has the third hole 17.

The first annular body 11 is arranged radially around the winding 40, and the cooling medium can be sprayed through the third hole 17 formed at the first annular body 11 to the radial peripheral surface of the winding 40. The second annular body 12 is disposed at the end of the winding 40 away from the stator core 30, and the cooling medium can be sprayed through the third hole 17 formed at the second annular body 12 to the axial end surface of the winding 40. Therefore, the radial outer circumference surface and the axial end surface of the winding 40 are cooled simultaneously, and the cooling region range of the winding is increased, which allows the winding 40 to be cooled more evenly.

In some embodiments, the third hole 17 includes a second spray hole 16 formed at the first annular body 11 and a first spray hole 15 formed at the second annular body 12. The second spray hole 16 has a central axis extending in a radial direction of the stator core 30. The first spray hole 15 has a central axis extending in an axial direction of the stator core 30.

The central axis of the first spray hole 15 extends in the axial direction of the stator core 30, and thus the cooling medium can be sprayed axially towards the axial end of the winding 40. The central axis of the second spray hole 16 extends in the radial direction of the stator core 30, and thus the cooling medium can be sprayed radially towards the radial periphery of the winding 40. As a result, the radial outer circulation surface and the axial end surface of the winding 40 can be cooled simultaneously. Therefore, the winding 40 can be cooled more evenly, and thus the local high temperature can be avoided.

In some embodiments, the second annular body 12 has a first end connected to the first annular body 11, and a second end axially located further away from the winding 40 than the first end of the second annular body 12 and radially located close to a central axis of the housing 20.

The second end of the second annular body 12 is axially located further away from the winding 40 than the first end of the second annular body 12 and radially located close to the central axis of the housing 20. In another exemplary embodiment of the present disclosure, the second end of the second annular body 12 is arranged obliquely, or is formed as the inner ring of the second annular body 12. Therefore, the first spray hole 15 that has the central axis axially extending can be easily formed at the second annular body 12. Therefore, the cooling medium is sprayed to the axial end of the winding 40 through the first spray hole 15 to cool the axial end of the winding 40.

In some embodiments, the spray ring 100 further includes a third annular body 13. The third annular body 13 has an inner ring connected to the second end of the second annular body 12. An outer diameter of the third annular body 13 is greater than an outer diameter of the first annular body 11. The third annular body 13 is connected to the housing 20.

The outer diameter of the third annular body 13 is greater than the outer diameter of the first annular body 11, and the third annular body 13 is used to be connected to the housing 20. In another exemplary embodiment of the present disclosure, the third annular body 13 is connected to the housing 20 by a connector, or the third annular body 13 is snapped or abutted with a slot on the housing 20m, or the third annular body 13 is connected to the housing 20 by means of the interference fit.

In another exemplary embodiment of the present disclosure, the spray ring 100 can be constructed into a segmented ring structure for an electric motor of a relatively small power to save development costs and increase design flexibility.

In some embodiments, the stator core 30 is provided with windings 40 at two axial ends of the stator core 30, respectively. The spray ring 100 is disposed on each of regions where the two winding 40 are located. The housing 20 has a first hole 21 in the axial middle part of the housing 20, and one second hole 22 is formed at each of two sides of the first hole 21, respectively. The first hole 21 is configured to introduce the cooling medium to the first channel 31. Two second holes 22 are configured to introduce the cooling medium to the cavities 50 formed between the respective spray rings 100 and the housing 20, respectively.

Referring to FIG. 2 to FIG. 6, some exemplary embodiments of the electric motor 200 and the spray ring 100 will be described below in detail.

Referring to FIG. 2, the electric motor 200 includes a housing 20, an end cover 80, a stator assembly, a rotor assembly, and a spray ring 100.

An end of the housing 20 is closed, and the other end of the housing 200 is provided with the end cover 80. The stator assembly, the rotor assembly, and the spray ring 100 are all arranged in the housing 20.

The stator assembly includes a stator core 30 and a winding 40. Each of two axial ends of the stator core 30 is provided with one winding 40, and the two windings 40 are a first winding and a second winding, respectively. A region where each winding 40 is located is provided with the spray ring 100. Two spray rings 100 are a first spray ring and a second spray ring, respectively. A cavity 50 is formed between each of the two spray rings 100 and the housing 20. The two cavities 50 are a first cavity and a second cavity, respectively.

The rotor assembly includes a rotor shaft 70 penetrating the housing 20 in an axial direction of the housing 20.

The first spray ring is arranged around the first winding. The first spray ring is engaged with an inner cylindrical surface of the housing 20 in a radial direction of the first spray, and the first spray ring is in contact with the axial end of the stator core 30 and sealed in an axial direction of first spray. The first cavity is formed between the first spray ring and an inner wall of the housing 20. The second spray ring is arranged around the second winding. The second spray ring is engaged with the inner cylindrical surface of the housing 20 in a radial direction of the second spray. The second spray ring is in with contact the axial end of the stator core 30 and sealed in an axial direction of second spray. The second cavity is formed between the second spray ring and the inner wall of the housing 20.

Referring to FIG. 3 and FIG. 4, the spray ring 100 has a plurality of second spray holes 16 formed in the radial direction of the spray ring 100 and a plurality of first spray holes 15 formed in the axial direction of the spray ring 100.

A plurality of first channels 31 is formed at the outer circumference of the stator core 30. Each first channel 31 extends in the axial direction of the stator core 30. The plurality of first channels 31 are in communication with each other.

The second channel 60 is formed at the outer wall of the housing 20. Lubricating oil in the reducer enters the second channel 60 through an oil filter, an oil pump, and the oil cooler. The second channel 60 is in communication with the first cavity, the second cavity, and the first channels 31 on the stator core. Cooling oil entering the second channel 60 enters the first channels 31 on the stator core 30, the first cavity, and the second cavity through the first hole 21 and two second holes 22 after reasonable diversion. The cooling oil entering the first cavity is sprayed to the first winding through the second spray hole 16 and the first spray hole 15 on the first spray ring under a predetermined oil pressure. The cooling oil entering the second cavity is sprayed to the second winding through the second spray hole 16 and the first spray hole 15 on the second spray ring under a predetermined oil pressure. The cooling oil entering the first channels 31 on the stator core 30 cools the stator core 30, and after cooling the stator core 30, the cooling oil enters the first cavity and the second cavity from two sides in the axial direction, thereby continuing to cool the windings 40 at two ends of the stator core 30.

Referring to FIG. 6, the spray ring 100 includes a first annular body 11, a second annular body 12, a third annular body 13, and a fourth annular body 14. A first end of the second annular body 12 is connected to the first annular body 11. A second end of the second annular body 12 is axially located further away from the first annular body 11 than the first end of the second annular body 12 and radially close to the central axis of the spray ring 100. A first end of the fourth annular body 14 is connected to the second end of the second annular body 12, and a second end of the fourth annular body 14 is axially located further away from the second annular body 12 than the first end of the fourth annular body 14. The second end of the fourth annular body 14 is connected to an inner ring of the third annular body 13. An outer ring of the third annular body 13 is used to be connected to the housing 20. An outer diameter of the third annular body 13 is greater than an outer diameter of the first annular body 11.

The spray ring 100 may be designed into a complete ring structure or a segmented structure based on the actual structural characteristics and cooling requirements.

A vehicle according to some embodiments is provided. The vehicle includes the electric motor 200 according to any one of the above embodiments.

The vehicle 300 includes a new energy vehicle, which may be a pure electric vehicle, a hybrid vehicle, or an extended range vehicle.

The vehicle includes the electric motor according to the embodiments of the present disclosure, and accordingly has the beneficial effect of the electric motor.

Although the present disclosure has been described with reference to preferred embodiments, various modifications may be made thereto and equivalents may be substituted for components thereof without departing from the scope of the present disclosure. In particular, the technical features mentioned in individual embodiments may be combined arbitrarily without any structural conflict. The present disclosure is not limited to the particular embodiments disclosed herein, and includes all technical solutions falling within the scope of the claims.

## Claims

1. A spray ring, comprising an annular body (10) configured such that a flow passage is formed between the annular body (10) and an external component, wherein:
the annular body (10) has a first spray hole (15) and a second spray hole (16) that are both in communication with the flow passage; and
the first spray hole (15) has an output direction different from an output direction of the second spray hole (16).

2. The spray ring according to claim 1, wherein:
the output direction of the first spray hole (15) is parallel to an axial direction of the spray ring, or is angled to the axial direction of the spray ring at an acute angle; and
the output direction of the second spray hole (16) is parallel to a radial direction of the spray ring, or is angled to the radial direction of the spray ring at an acute angle.

3. The spray ring according to claim 1 or 2, wherein:
the annular body comprises a first annular body (11) and a second annular body (12), the second annular body (12) having a first end connected to the first annular body (11) and a second end located closer to a central axis of the spray ring than the first end of the second annular body (12);
the first spray hole (15) is formed at the second annular body (12); and
the second spray hole (16) is formed at the first annular body (11).

4. The spray ring according to claim 3, wherein the second end of the second annular body (12) is axially located further away from the first annular body (11) than the first end of the second annular body (12).

5. The spray ring according to claim 3 or 4, wherein the annular body (10) further comprises a third annular body (13), the third annular body (13) having an inner ring connected to the second end of the second annular body (12), and an outer diameter of the third annular body (3) being greater than an outer diameter of the first annular body (11).

6. The spray ring according to claim 5, wherein the annular body (10) further comprises a fourth annular body (14),
wherein the fourth annular body (14) has a first end connected to the second end of the second annular body (12) and a second end connected to the inner ring of the third annular body (13), the second end of the fourth annular body (14) being axially located further away from the second annular body (12) than the first end of the fourth annular body (14).

7. An electric motor, comprising:
a housing (20);
a stator core (30) provided in the housing (20);
a winding (40) provided at an end of the stator core (30); and
the spray ring (100) according to any one of claims 1 to 6, the spray ring (100) being provided at a position where the winding (40) is located and configured to spray a cooling medium towards the winding (40).

8. The electric motor according to claim 7, wherein:
a cavity (50) is formed between the spray ring (100) and the housing (20), the cavity (50) being constructed as the flow passage; and
the first spray hole (15) and the second spray hole (16) are configured to spray the cooling medium in the cavity (50) towards the winding (40).

9. The electric motor according to claim 7 or 8, wherein the spray ring (100) comprises:
a first annular body (11) disposed around the winding (40); and
a second annular body (12) disposed at an end of the winding (40) away from the stator core (30), wherein:
the first spray hole (15) is formed at the second annular body (12); and
the second spray hole (16) is formed at the first annular body (11).

10. The electric motor according to claim 9, wherein the second annular body (12) has a first end connected to the first annular body (11), and a second end axially located further away from the winding (40) than the first end of the second annular body (12) and radially located close to a central axis of the housing (20).

11. The electric motor according to claim 9 or 10, wherein the spray ring (100) further comprises a third annular body (13), the third annular body (13) having an inner ring connected to a second end of the second annular body (12), an outer diameter of the third annular body (13) being greater than an outer diameter of the first annular body (11), and the third annular body (13) being connected to the housing (20).

12. The electric motor according to any one of claims 7 to 11, wherein:
the stator core (30) has a first channel (31); and
the housing (20) has a first hole (21) and a second hole (22), the first hole (21) being configured to introduce a cooling medium into the first channel (31), and the second hole (22) being configured to introduce the cooling medium to a position between the spray ring (100) and the housing (20).

13. The electric motor according to claim 12, further comprising a second channel (60), wherein:
the second channel (60) has a channel wall connected to an outer wall surface of the housing (20); and
the second channel (60) is in communication with the first hole (21) and the second hole (22), respectively.

14. The electric motor according to claim 12 or 13, wherein the first hole (21) has a greater hole diameter than the second hole (22).

15. The electric motor according to any one of claims 12 to 14, wherein a plurality of first channels (31) is provided, the plurality of first channels (31) being arranged in a circumferential direction of the stator core (30),
wherein each of the plurality of first channels (31) extends in an axial direction of the stator core (30) and has a notch (32) in communication with an adjacent first channel (31), the first hole (21) being in communication with a notch (32) on one of the plurality of first channels (31).

16. An electric motor comprising:
a housing (20) having a first hole (21) and a second hole (22);
a stator core (30) provided in the housing (20) and having a first channel (31);
a winding (40) provided at an end of the stator core (30); and
a second channel (60) having a channel wall connected to an outer wall surface of the housing (20), the second channel (60) being in communication with the first hole (21) and the second hole (22), respectively, the first hole (21) being in communication with the first channel (31), and the second hole (22) being in communication with a region where the winding (40) is located.

17. The electric motor according to claim 16, wherein the first hole (21) has a greater hole diameter than the second hole (22).

18. The electric motor according to claim 16 or 17, wherein a plurality of first channels (31) is provided, the plurality of first channels (31) being arranged in a circumferential direction of the stator core (30),
wherein each of the plurality of first channels (31) extends in an axial direction of the stator core (30) and has a notch (32) in communication with an adjacent first channel (31), the first hole (21) being in communication with a notch (32) on one of the plurality of first channels (31).

19. The electric motor according to any one of claims 16 to 18, further comprising a spray ring (100), wherein:
the spray ring (100) is disposed in the housing (20) and located at a position where the winding (40) is located; and
the spray ring (100) has a third hole (17) configured to spray a cooling medium introduced through the second hole (22) towards the winding (40).

20. The electric motor according to claim 19, wherein the third hole (17) comprises:
a first spray hole (15) configured to spray the cooling medium towards the winding (40) in an axial direction of the stator core (30); and
a second spray hole (16) configured to spray the cooling medium towards the winding (40) in a radial direction of the stator core (30).

21. The electric motor according to claim 19 or 20, wherein the spray ring (100) comprises:
a first annular body (11) arranged around the winding (40); and
a second annular body (12) disposed at an end of the winding (40) away from the stator core (30),
wherein each of the first annular body (11) and the second annular body (12) has the third hole (17).

22. The electric motor according to claim 21, wherein the third hole (17) comprises a second spray hole (16) formed at the first annular body (11) and a first spray hole (15) formed at the second annular body (12), wherein:
the second spray hole (16) has a central axis extending in a radial direction of the stator core (30); and
the first spray hole (15) has a central axis extending in an axial direction of the stator core (30).

23. The electric motor according to claim 21 or 22, wherein the second annular body (12) has a first end connected to the first annular body (11), and a second end axially located further away from the winding (40) than the first end of the second annular body (12) and radially located close to a central axis of the housing (20).

24. The electric motor according to claim 23, wherein the spray ring (100) further comprises a third annular body (13), the third annular body (13) having an inner ring connected to the second end of the second annular body (12), an outer diameter of the third annular body (13) being greater than an outer diameter of the first annular body (11), and the third annular body (13) being connected to the housing (20).

25. A vehicle, comprising the electric motor (200) according to any one of claims 7 to 24.
